(19) Europäisches Patentamt
European Patent Office
Office européen des brevets

(11) EP 3 926 081 A1

(12) EUROPEAN PATENT APPLICATION
published in accordance with Art. 153(4) EPC

(43) Date of publication:
22.12.2021 Bulletin 2021/51

(21) Application number: 20755543.4

(22) Date of filing: 28.01.2020

(51) Int Cl.:
*D01F 6/62* (2006.01) *D07B 1/02* (2006.01)
*G02B 6/44* (2006.01)

(86) International application number:
PCT/JP2020/002868

(87) International publication number:
WO 2020/166316 (20.08.2020 Gazette 2020/34)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 12.02.2019 JP 2019022584

(71) Applicant: Toray Industries, Inc.
Tokyo, 103-8666 (JP)

(72) Inventors:
- TANAKA, Hisatoshi
Okazaki-shi, Aichi 444-8522 (JP)
- SAKAE, Ryosuke
Okazaki-shi, Aichi 444-8522 (JP)
- MATOBA, Munekazu
Okazaki-shi, Aichi 444-8522 (JP)

(74) Representative: Mewburn Ellis LLP
Aurora Building
Counterslip
Bristol BS1 6BX (GB)

# (54) LIQUID-CRYSTAL POLYESTER MULTIFILAMENT, AND HIGH-LEVEL PROCESSED PRODUCT COMPRISING SAME

(57) This liquid-crystal polyester multifilament has a compression yield stress of 15-40 mN/dtex. The present invention provides a liquid-crystal polyester multifilament with which it is possible to realize much higher flexural fatigue resistance in comparison with the prior art when used in a high-level processed product.

EP 3 926 081 A1

## Description

TECHNICAL FIELD

The present invention relates to a liquid crystalline polyester multifilament. More specifically, the present invention relates to a liquid crystalline polyester multifilament that can be suitably used in high-order processed products for general industrial material applications, such as ropes and slings.

BACKGROUND ART

Liquid crystalline polyester fibers are made of a liquid crystalline polyester polymer having a rigid molecular structure. It is known that the liquid crystalline polyester fibers exhibit the highest strength and elastic modulus among fibers obtained by melt spinning, because in the melt spinning, molecular chains are highly oriented in a fiber axis direction, and the liquid crystalline polyester fibers are subjected to heat treatment at a high temperature for a long time. It is also known that the liquid crystalline polyester fibers have improved heat resistance and dimensional stability because the heat treatment increases the molecular weight and the melting point of the liquid crystalline polyester fibers. Such liquid crystalline polyester fibers can be suitably used in general industrial material applications, such as ropes, slings, fishing nets, nets, meshes, woven fabrics, fabrics, sheet-shaped objects, belts, tension members, various reinforcing cords, and resin-reinforcing fibers.

PRIOR ART DOCUMENT

PATENT DOCUMENT

Patent Document 1: Japanese Patent Laid-open Publication No. 2004-107826

SUMMARY OF THE INVENTION

PROBLEM TO BE SOLVED BY THE INVENTION

Although the liquid crystalline polyester fibers exhibit high strength in the fiber axis direction, the liquid crystalline polyester fibers are weak against the force in a direction perpendicular to the fiber axis and are easily fatigued against repeated bending. Therefore, the liquid crystalline polyester fibers have a problem that a high-order processed product including the liquid crystalline polyester fibers, such as a rope or a sling, has decreased strength after being repeatedly used.

In order to solve the above-mentioned problem, Patent Document 1 proposes a polyarylate fiber with 0.03 to 5.0 mass% of inorganic fine particles attached to a surface thereof. The inorganic fine particles have a Mohs hardness of 4 or less, mainly contain silicic acid and magnesium, and have an average particle size of 0.01 to 15 μm. In the method described in Patent Document 1, however, the polyarylate fiber has a compressive yield stress of about 6 mN/dtex, and has insufficient bending fatigue resistance.

As described above, the prior art does not provide a liquid crystalline polyester multifilament that exhibits high bending fatigue resistance when used in a high-order processed product.

The present invention has been made as a result of intensive studies in view of the above-mentioned circumstances, and an object of the present invention is to provide a liquid crystalline polyester multifilament that can exhibit much higher bending fatigue resistance than that in the prior art when used in a high-order processed product.

SOLUTIONS TO THE PROBLEM

In order to solve the above-mentioned problem, the present invention has the following configuration.

(1) A liquid crystalline polyester multifilament having a fiber compressive yield stress of 15 to 40 mN/dtex.
(2) The liquid crystalline polyester multifilament according to the item (1), having a yarn flexibility index of 8.0 or less.
(3) The liquid crystalline polyester multifilament according to the item (1) or (2), having an initial elastic modulus of 400 cN/dtex or more.
(4) The liquid crystalline polyester multifilament according to any one of the items (1) to (3), having a number of filaments of 10 to 600.
(5) The liquid crystalline polyester multifilament according to any one of the items (1) to (4), having a total fineness of 100 to 3000 dtex.

(6) The liquid crystalline polyester multifilament according to any one of the items (1) to (5), containing a liquid crystalline polyester including structural units (I), (II), (III), (IV), and (V) shown in the following chemical formulae:

[Chemical Formula 1]

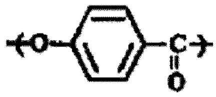

(I)

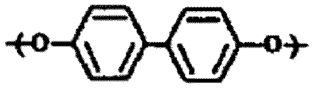

(II)

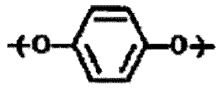

(III)

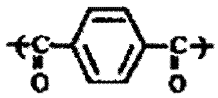

(IV)

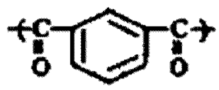

(V)

(7) The liquid crystalline polyester multifilament according to any one of the items (1) to (6), wherein a percentage of the structural unit (I) is 40 to 85 mol% based on a total amount of the structural units (I), (II), and (III), a percentage of the structural unit (II) is 60 to 90 mol% based on a total amount of the structural units (II) and (III), and a percentage of the structural unit (IV) is 40 to 95 mol% based on a total amount of the structural units (IV) and (V).
(8) The liquid crystalline polyester multifilament according to any one of the items (1) to (5), containing a liquid crystalline polyester including a p-hydroxybenzoic acid structural unit and a 6-hydroxy-2-naphthoic acid structural unit.
(9) The liquid crystalline polyester multifilament according to any one of the items (1) to (5) and (8), including, based on the liquid crystalline polyester multifilament in total, 60 to 80 mol% of a p-hydroxybenzoic acid structural unit and 20 to 40 mol% of a 6-hydroxy-2-naphthoic acid structural unit.
(10) A high-order processed product including the liquid crystalline polyester multifilament according to any one of the items (1) to (9).
(11) A rope, a sling, a tension member, or a cable including the liquid crystalline polyester multifilament according to any one of the items (1) to (9).

EFFECTS OF THE INVENTION

Since the liquid crystalline polyester multifilament of the present invention can exhibit high bending fatigue resistance when used in a high-order processed product, the liquid crystalline polyester multifilament can be suitably used in general industrial material applications such as ropes, slings, and tension members.

BRIEF DESCRIPTION OF THE DRAWING

Fig. 1 is a schematic view of a device for measuring bending fatigue resistance.

EMBODIMENTS OF THE INVENTION

Hereinafter, the liquid crystalline polyester multifilament of the present invention and a method for producing

the same will be described in detail.

The method for producing the liquid crystalline polyester multifilament of the present invention is not limited at all as long as the liquid crystalline polyester multifilament defined in the present invention is obtained, but preferred embodiments of the production method will be described below.

The liquid crystalline polyester used in the present invention refers to a polyester that exhibits optical anisotropy (liquid crystallinity) when melted by heating. Such characteristics can be recognized, for example, by placing a sample on a hot stage, heating the sample in a nitrogen atmosphere by raising the temperature, and observing the presence or absence of light transmitted through the sample using a polarizing microscope.

Examples of the liquid crystalline polyester used in the present invention include (a) polymerized products of aromatic oxycarboxylic acids, (b) polymerized products of an aromatic dicarboxylic acid, an aromatic diol, and an aliphatic diol, and (c) copolymerized products of (a) and (b). In particular, polymerized products composed only of aromatic compounds are preferable. Polymerized products composed only of aromatic compounds exhibit excellent strength and elastic modulus when formed into a fiber. As a prescription for polymerization of the liquid crystalline polyester, a conventionally known method can be used.

Herein, examples of the aromatic oxycarboxylic acid include hydroxybenzoic acid (such as p-hydroxybenzoic acid), hydroxynaphthoic acid (such as 6-hydroxy-2-naphthoic acid), and alkyl, alkoxy, and halogen substitution products of the above-mentioned aromatic oxycarboxylic acids.

Examples of the aromatic dicarboxylic acid include terephthalic acid, isophthalic acid, diphenyldicarboxylic acid, naphthalenedicarboxylic acid, diphenyletherdicarboxylic acid, diphenoxyethanedicarboxylic acid, diphenylethanedicarboxylic acid, and alkyl, alkoxy, and halogen substitution products of the above-mentioned aromatic dicarboxylic acids.

Further, examples of the aromatic diol include hydroquinone, resorcin, dihydroxybiphenyl, naphthalenediol, and alkyl, alkoxy, and halogen substitution products of the above-mentioned aromatic diols, and examples of the aliphatic diol include ethylene glycol, propylene glycol, butanediol, and neopentyl glycol.

In the liquid crystalline polyester used in the present invention, monomers other than those mentioned above can be further copolymerized as long as the liquid crystallinity is not impaired, and examples of the monomers include aliphatic dicarboxylic acids such as adipic acid, azelaic acid, sebacic acid, and dodecanedioic acid, alicyclic dicarboxylic acids such as 1,4-cyclohexanedicarboxylic acid, polyethers such as polyethylene glycol, polysiloxanes, aromatic iminocarboxylic acids, aromatic diimines, and aromatic hydroxyimines.

Preferable examples of the liquid crystalline polyester that is used in the present invention and obtained by polymerizing the above-mentioned monomers include a liquid crystalline polyester obtained by copolymerizing a p-hydroxybenzoic acid component and a 6-hydroxy-2-naphthoic acid component, a liquid crystalline polyester obtained by copolymerizing a p-hydroxybenzoic acid component, a 4,4'-dihydroxybiphenyl component, an isophthalic acid component, and/or a terephthalic acid component, and a liquid crystalline polyester obtained by copolymerizing a p-hydroxybenzoic acid component, a 4,4'-dihydroxybiphenyl component, an isophthalic acid component, a terephthalic acid component, and a hydroquinone component.

In the present invention, it is particularly preferable that the liquid crystalline polyester be a liquid crystalline polyester including structural units (I), (II), (III), (IV), and (V) shown in the following chemical formulae, or a liquid crystalline polyester containing p-hydroxybenzoic acid and 6-hydroxy-2-naphthoic acid. In the present invention, the "structural unit" means a unit capable of forming a repeating structure in the main chain of the polymer.

[Chemical Formula 1]

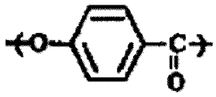
(I)

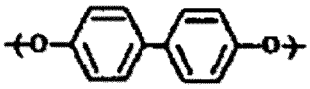
(II)

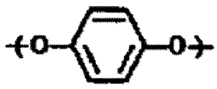
(III)

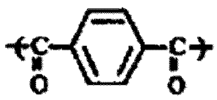
(IV)

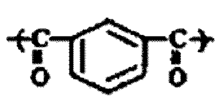
(V)

Owing to the above-mentioned combination, the molecular chain has adequate crystallinity and nonlinearity, that is, the polymer has a melting point at which the polymer is melt-spinnable. Therefore, the polymer has favorable yarn-making properties at a spinning temperature that is set between the melting point and the thermal decomposition temperature of the polymer, fibers that are relatively uniform in the longitudinal direction are obtained, and the fibers have increased strength and elastic modulus because of moderate crystallinity.

When the liquid crystalline polyester including the structural units (I) to (V) is used, it is preferable to combine a component that is not bulky and includes a diol having high linearity, such as the structural units (II) and (III). When these components are combined, the molecular chains in the fibers have an ordered and less disorganized structure, the crystallinity is not excessively increased, and the interaction in the direction perpendicular to the fiber axis can also be maintained. As a result, excellent abrasion resistance is obtained in addition to high strength and high elastic modulus.

The percentage of the above-mentioned structural unit (I) is preferably 40 to 85 mol%, more preferably 65 to 80 mol%, and still more preferably 68 to 75 mol% based on the total amount of the structural units (I), (II), and (III). When the percentage of the structural unit (I) is within the above-mentioned range, the crystallinity can be controlled within an appropriate range, high strength and high elastic modulus are obtained, and the melting point falls within a range in which the polymer is melt-spinnable.

The percentage of the structural unit (II) is preferably 60 to 90 mol%, more preferably 60 to 80 mol%, and still more preferably 65 to 75 mol% based on the total amount of the structural units (II) and (III). When the percentage of the structural unit (II) is within the above-mentioned range, the crystallinity is not excessively increased, and the interaction in the direction perpendicular to the fiber axis can also be maintained, so that abrasion resistance can be increased.

The percentage of the structural unit (IV) is preferably 40 to 95 mol%, more preferably 50 to 90 mol%, and still more preferably 60 to 85 mol% based on the total amount of the structural units (IV) and (V). When the percentage of the structural unit (IV) is within the above-mentioned range, the polymer has a melting point within an appropriate range, the polymer has favorable yarn-making properties at a spinning temperature that is set between the melting point and the thermal decomposition temperature of the polymer, and fibers that have a small single fiber fineness and are relatively uniform in the longitudinal direction are obtained.

The total amount of the structural units (II) and (III) and the total amount of the structural units (IV) and (V) are preferably substantially equimolar. The term "substantially equimolar" as used herein means that the dioxy unit and the dicarbonyl unit that constitute the main chain are present in equimolar amounts, and that amounts of the terminal structural units do not necessarily have to be equimolar because one of the terminal structural units may be unevenly distributed.

Particularly preferable ranges of the amounts of the structural units in the liquid crystalline polyester used in the present invention are as follows. The preferable range of the amount of each of the structural units is a range based on 100 mol% in total of the structural units (I), (II), (III), (IV), and (V). The liquid crystalline polyester fibers of the present invention are suitably obtained by adjusting the composition so that the liquid crystalline polyester may satisfy the above-mentioned conditions within the following ranges.

| | |
|---|---|
| Structural unit (I) | 45 to 65 mol% |
| Structural unit (II) | 12 to 18 mol% |
| Structural unit (III) | 3 to 10 mol% |
| Structural unit (IV) | 5 to 20 mol% |
| Structural unit (V) | 2 to 15 mol% |

When a liquid crystalline polyester containing p-hydroxybenzoic acid and 6-hydroxy-2-naphthoic acid is used, it is preferable to set, based on the liquid crystalline polyester in total, the percentage of the p-hydroxybenzoic acid structural unit to 60 to 80 mol% and the percentage of the 6-hydroxy-2-naphthoic acid structural unit to 20 to 40 mol%, and it is more preferable to set the percentage of the p-hydroxybenzoic acid structural unit to 65 to 75 mol% and the percentage of the 6-hydroxy-2-naphthoic acid structural unit to 25 to 35 mol%. When the percentages are within the above-mentioned ranges, the polymer has a melting point within an appropriate range, and the polymer has favorable yarn-making properties.

The liquid crystalline polyester used in the present invention preferably has a polystyrene-equivalent weight average molecular weight (hereinafter referred to as Mw) of 30,000 or more, and more preferably 50,000 or more. When the Mw is 30,000 or more, the liquid crystalline polyester can have an appropriate viscosity and improved yarn-making properties at the spinning temperature, and the higher the Mw is, the higher the strength, elongation, and elastic modulus of the obtained fibers are. From the viewpoint of achieving excellent fluidity, the Mw is preferably less than 250,000, and more preferably less than 150,000. The Mw referred to herein is a value determined by the method described in the section of EXAMPLES.

The melting point of the liquid crystalline polyester used in the present invention is preferably within the range of 200 to 380°C, more preferably 250 to 350°C, and still more preferably 290 to 340°C from the viewpoint of ease of melt spinning and heat resistance. The melting point referred to herein is a value determined by the method described in the section of EXAMPLES.

In addition, an additional polymer can be added and used in combination with the liquid crystalline polyester used in the present invention as long as the effects of the present invention are not impaired. The addition and combined use refer to a case where the polymers are mixed together, or a case of composite spinning of two or more components, where the additional polymer is partially mixed and used in one or a plurality of the components, or used as a whole of one or a plurality of the components. Examples of the additional polymer that may be added include vinyl polymers such as polyesters, polyolefins, and polystyrenes, and polymers such as polycarbonates, polyamides, polyimides, polyphenylene sulfide, polyphenylene oxide, polysulfones, aromatic polyketones, aliphatic polyketones, semi-aromatic polyester amides, polyether ether ketone, and fluororesins. Suitable examples of the additional polymer include polyphenylene sulfide, polyether ether ketone, nylon 6, nylon 66, nylon 46, nylon 6T, nylon 9T, polyethylene terephthalate, polypropylene terephthalate, polybutylene terephthalate, polyethylene naphthalate, polycyclohexanedimethanol terephthalate, and polyester 99M. When any of the above-mentioned polymers is added and used in combination, it is preferable that the melting point of the polymer be set within ±30°C of the melting point of the liquid crystalline polyester in order not to impair the yarn-making properties. Moreover, in order to improve the strength and elastic modulus of the obtained fibers, the amount of the additional polymer to be added and used in combination is preferably 50 wt% or less, and more preferably 5 wt% or less based on the amount of the liquid crystalline polyester, and it is most preferable that the additional polymer be not substantially added and used in combination.

The liquid crystalline polyester used in the present invention may contain, as long as the effects of the present invention are not impaired, inorganic substances such as various metal oxides, kaolin, and silica, and additives such as colorants, matting agents, flame retardants, antioxidants, ultraviolet absorbers, infrared absorbers, crystal nucleating agents, fluorescent brighteners, end capping agents, and compatibilizers in a small amount.

Next, physical properties and the like of the liquid crystalline polyester multifilament of the present invention will be described.

The compressive yield stress of the liquid crystalline polyester multifilament of the present invention is required to be 15 to 40 mN/dtex, preferably 20 to 40 mN/dtex, and more preferably 25 to 40 mN/dtex. When the compressive yield stress is 15 to 40 mN/dtex, in the case where the liquid crystalline polyester multifilament is used in a high-order processed product, the original yarns maintain the strength even when repeatedly bent, so that the product has improved bending fatigue resistance. Meanwhile, when the compressive yield stress is less than 15 mN/dtex, in the case where the liquid crystalline polyester multifilament is used in a high-order processed product, the original yarns tend to have decreased strength when repeatedly bent, so that the product does not have sufficient bending fatigue resistance. The upper limit of the compressive yield stress that can be achieved by the above-mentioned production method is about

40 mN/dtex. The compressive yield stress refers to a value determined by the method described in the section of EXAMPLES.

The yarn flexibility index (X) of the liquid crystalline polyester multifilament of the present invention is preferably 8.0 or less, more preferably 5.0 or less, and still more preferably 4.0 or less. When the yarns have high flexibility, the handling property in a high-order process is improved, and it is also advantageous for exhibiting high bending fatigue resistance because the stress applied during repeated bending can be distributed in the yarns. When the yarn flexibility index (X) is 8.0 or less, the unwinding properties at the time of unwinding the package can be significantly improved, and the process passability at the time of high-order processing can be drastically improved. The lower limit of the yarn flexibility index that can be reached in the present invention is about 0.1. The yarn flexibility index (X) of the multifilament refers to a value determined by the method described in the section of EXAMPLES.

The initial elastic modulus of the liquid crystalline polyester multifilament of the present invention is preferably 400 cN/dtex or more, more preferably 500 cN/dtex or more, and still more preferably 600 cN/dtex or more. When the initial elastic modulus is 400 cN/dtex or more, the liquid crystalline polyester multifilament undergoes little dimensional change upon being subjected to stress, and is suitable for industrial material applications. The upper limit of the initial elastic modulus is not particularly limited, but the upper limit that can be reached in the present invention is about 1,000 cN/dtex. The initial elastic modulus referred to herein refers to a value determined by the method described in the section of

EXAMPLES.

The single fiber fineness of the liquid crystalline polyester multifilament of the present invention is preferably 1 to 30 dtex. The single fiber fineness is more preferably 1 to 20 dtex. When the single fiber fineness is as small as 1 to 30 dtex, the single fibers after discharge can be uniformly cooled to the inside thereof, the yarn-making properties are stabilized, and a liquid crystalline polyester multifilament having good fluff quality is easily obtained. In addition, the fibers are exposed to the outside air in a larger surface area during heat treatment, which is advantageous for higher strength and higher elasticity. Since the liquid crystalline polyester multifilament of the present invention having a single fiber fineness of 1 to 30 dtex incudes flexible yarns, the yarns have excellent high-order process passability. Moreover, in a woven fabric or the like including the liquid crystalline polyester multifilament, the fabric may have high density and improved storability because it is highly filled with the yarns. In the present invention, a quotient of the total fineness divided by the number of single fibers was defined as the single fiber fineness (dtex) .

The number of single fibers (number of filaments) of the liquid crystalline polyester multifilament of the present invention is preferably 10 to 600, more preferably 10 to 400, and still more preferably 10 to 300. When the number of single fibers is 10 to 600, productivity to produce the multifilament can be improved. Moreover, since the fibers are exposed to the outside air in a larger surface area during heat treatment, the solid phase polymerization reaction is promoted, the variation in strength and elastic modulus is reduced, and a liquid crystalline polyester multifilament having uniform physical properties is obtained. In addition, there is no problem in dividing or doubling a sample or samples obtained by spinning to form a liquid crystalline polyester multifilament having a number of single fibers of 10 to 600. The number of single fibers refers to a value determined by the method described in the section of

EXAMPLES.

The total fineness (T) of the liquid crystalline polyester multifilament of the present invention is preferably 100 to 3000 dtex, more preferably 150 to 2500 dtex, and still more preferably 200 to 2000 dtex. When the total fineness is 100 to 3000 dtex, the liquid crystalline polyester multifilament has high process passability, and is suitable for industrial material applications in which a very large amount of original yarns are used. In addition, there is no problem in dividing or doubling a sample or samples obtained by spinning to form a liquid crystalline polyester multifilament having a total fineness of 100 to 3000 dtex. The total fineness refers to a value determined by the method described in the section of EXAMPLES.

In the production of the liquid crystalline polyester multifilament of the present invention, the liquid crystalline polyester is melt-spun. In the melt spinning of the liquid crystalline polyester multifilament, a common method can be used as a basic melt extrusion method, and it is preferable to use an extruder type extrusion machine in order to eliminate an ordered structure generated during polymerization. The extruded polymer is sent through a pipe and weighed by a known weighing machine such as a gear pump, passes through a filter for removing foreign substances, and then is guided to a spinneret. In this case, the temperature of a part from the polymer pipe to the spinneret (that is, the spinning temperature) is preferably not less than the melting point of the liquid crystalline polyester and not more than the thermal decomposition temperature thereof, more preferably not less than (the melting point of the liquid crystalline polyester + 10°C) and not more than 400°C, and still more preferably not less than (the melting point of the liquid crystalline polyester + 20°C) and not more than 370°C. It is also possible to independently adjust temperatures of the part from the polymer pipe to the spinneret. In this case, the temperature of a part close to the spinneret is set to be higher than the temperature

of a part on the upstream side of the spinneret to stabilize the discharge.

In the melt spinning of the liquid crystalline polyester multifilament of the present invention, a large number of spinneret holes are usually provided in one spinneret for the purpose of reducing energy cost and improving the productivity. Therefore, it is preferable to stabilize the discharge and thinning behavior from each spinneret hole.

In order to achieve such stabilization, it is preferable to reduce the spinneret hole diameter and increase the land length (length of the straight pipe portion of the spinneret hole). However, from the viewpoint of effectively preventing clogging of the hole, the hole diameter is preferably 0.03 mm or more and 1.00 mm or less, more preferably 0.05 mm or more and 0.80 mm or less, and still more preferably 0.08 mm or more and 0.60 mm or less. From the viewpoint of effectively preventing an increase in pressure loss, L/D, which is defined by a quotient of the land length L divided by the hole diameter D, is preferably 0.5 or more and 3.0 or less, more preferably 0.8 or more and 2.5 or less, and still more preferably 1.0 or more and 2.0 or less.

In order to improve the productivity to produce the multifilament, the number of holes of one spinneret is preferably 10 or more and 1000 or less, more preferably 10 or more and 800 or less, and still more preferably 10 or more and 600 or less. It is preferable that the introduction hole located immediately above the spinneret hole be a straight hole whose diameter is 5 times or more the spinneret hole diameter from the viewpoint of not increasing the pressure loss. A portion connecting the introduction hole with the spinneret hole is preferably tapered in order to reduce abnormal retention, and the length of the tapered portion is preferably twice or less the land length in order to stabilize the flow line without increasing the pressure loss.

The polymer discharged from the spinneret holes is passed through a heat-retaining region and a cooling region and solidified into filaments, and then the filaments are taken up by a roller (godet roller) rotating at a constant speed. The length of the heat-retaining region is preferably 400 mm or less, more preferably 300 mm or less, and still more preferably 200 mm or less from the spinneret surface because if the heat-retaining region is excessively long, the yarn-making properties are deteriorated. In the heat-retaining region, it is also possible to increase the ambient temperature using a heating means, and the temperature range of the heat-retaining region is preferably 100°C or more and 500°C or less, and more preferably 200°C or more and 400°C or less. For the cooling, an inert gas, air, water vapor, or the like can be used, but it is preferable to use a parallel or annular air flow from the viewpoint of reducing the environmental load.

The take-up speed is preferably 50 m/min or more, more preferably 300 m/min or more, and still more preferably 500 m/min or more for improving the productivity. Since the liquid crystalline polyester used in the present invention has suitable stringiness at a spinning temperature, a high take-up speed can be employed. The upper limit of the take-up speed is not particularly limited, but is about 3,000 m/min from the viewpoint of stringiness of the liquid crystalline polyester used in the present invention.

The spinning draft defined by a quotient of the take-up speed divided by the discharge linear velocity is preferably 1 or more and 500 or less, more preferably 5 or more and 200 or less, and still more preferably 12 or more and 100 or less. Since the liquid crystalline polyester used in the present invention has suitable stringiness, a high spinning draft can be achieved, and it is advantageous for improving the productivity. The discharge linear velocity (m/min) used in the calculation of the spinning draft is a value defined by a quotient of the discharge rate per single hole ($m^3$/min) divided by the cross-sectional area ($m^2$) of the single hole. Since the take-up speed (m/min) is divided by the discharge linear velocity, the spinning draft is a dimensionless number.

In the present invention, from the viewpoint of improving the yarn-making properties and productivity, the polymer discharge rate per spinning pack is preferably set to 10 to 2,000 g/min, more preferably set to 20 to 1,000 g/min, and still more preferably set to 30 to 500 g/min in order to achieve the above-mentioned spinning draft. Spinning at a high discharge rate of 10 to 2,000 g/min improves the productivity of the liquid crystalline polyester.

For the winding, a common winding machine is used, and a package having a shape of cheese, pirn, corn or the like can be formed. It is preferable to form a cheese-shaped package for which a large winding amount can be set.

In the melt spinning of a liquid crystalline polyester multifilament, in general, filaments are bundled into a multifilament by the application of a spinning oil to the discharged yarns with an oiling roller or the like, and the multifilament is taken up with a roller or the like and then wound up with a winder without being stretched. Bundling multifilament spun yarns in this manner improves the winding property, and provides a package without collapse.

As for the liquid crystalline polyester multifilament, it is preferable to subject the filament obtained by melt spinning to solid phase polymerization.

When the multifilament in the form of a package is subjected to solid phase polymerization, the filaments are easily fused together. Therefore, in order to prevent the fusion, it is preferable to form a package having a winding density of 0.30 g/$cm^3$ or more on a bobbin and subject the package to solid phase polymerization. Herein, the winding density is a value calculated by Wf/Vf (g/$cm^3$) from the occupied volume Vf ($cm^3$) of the package obtained from the outer dimension of the package and the dimension of the bobbin serving as a core material, and the weight Wf (g) of the fibers. If the winding density is excessively small, the tension in the package is insufficient, so that the area of contact points between the fibers is large and the fusion between the fibers increase, and moreover, the package is collapsed. Therefore, the winding density is preferably 0.30 g/$cm^3$ or more, more preferably 0.40 g/$cm^3$ or more, and still more preferably 0.50

g/cm$^3$ or more. The upper limit of the winding density is not particularly limited, but is preferably 1.50 g/cm$^3$ or less. This is because if the winding density is excessively large, the adhesive force between the fibers in the inner layer of the package increases, and the fusion at the contact points increases. In the present invention, the winding density is more preferably 0.30 to 1.00 g/cm$^3$ from the viewpoint of reducing the fusion and preventing the collapse.

The package having the above-mentioned winding density has good process passability, and it is possible to simplify the process. For example, it is also possible to directly wind the liquid crystalline polyester multifilament after melt spinning to form a package having the above-mentioned winding density, and the package can have improved process passability. In addition, it is also possible to rewind the package obtained by once winding the multifilament in the melt spinning to form a package having the above-mentioned winding density in the adjustment of the yarn weight for the solid phase polymerization. In order to arrange the package shape and control the winding density, it is also effective to wind the multifilament with the package surface being in a non-contact state without using a contact roll or the like that is usually used, or to directly wind the melt-spun original yarns with a speed controlled winding machine without passing the yarns through a speed control roll. In these cases, in order to arrange the package shape, it is preferable that the winding speed be set to 3,000 m/min or less, and particularly to 2,000 m/min or less. The lower limit of the winding speed is preferably 50 m/min or more from the viewpoint of productivity.

The bobbin used to form the package may be any bobbin as long as the bobbin has a cylindrical shape. The bobbin is attached to a winding machine at the time the fibers are wound into a package, and the bobbin is rotated to wind the fibers and form a package. At the time of solid phase polymerization, the package may be integrally treated with the bobbin, or the package may be treated after only the bobbin is removed. When the package is treated in a state of being wound on the bobbin, the bobbin needs to withstand the solid phase polymerization temperature, and is preferably made of a metal such as aluminum, brass, iron, or stainless steel. In this case, it is preferable that the bobbin have a large number of holes so that the solid phase polymerization may be efficiently performed. When the package is treated after the removal of the bobbin, an outer cover is preferably attached to the outer surface of the bobbin. In any case, it is preferable that a cushion material be wound around the outer surface of the bobbin, and the liquid crystalline polyester melt-spun filament be wound on the cushion material. The material of the cushion material is preferably felt made of organic fibers such as aramid fibers or metal fibers, and the cushion material preferably has a thickness of 0.1 mm or more and 20 mm or less. The cushion material can serve as a substitute for the above-mentioned outer cover.

The fiber weight of the package may be any weight as long as the winding density is within the range of the present invention, but is preferably in a range of 0.01 kg or more and 11 kg or less in consideration of productivity. The yarn length is preferably in a range of 10,000 m or more and 2,000,000 m or less.

In a preferred embodiment, an oil is attached to the surface of the filament in order to prevent fusion during solid phase polymerization. Such component may be attached during a period from melt spinning to winding, but in order to increase the attachment efficiency, it is preferable to attach the component at the time of rewinding, or to attach a small amount of the component at the time of melt spinning and further add the component at the time of rewinding.

As for the oil for preventing fusion, it is preferable to apply a highly heat-resistant fusion inhibitor that maintains a liquid state even after the solid phase polymerization treatment. Prevention of polymer fusion between single fibers and fixation between the oil and yarns during solid phase polymerization leads to alignment of the single fibers without slack even after the solid phase polymerization. Therefore, the fibers can exhibit a high elastic modulus from the initial stage of elongation, and the high initial elastic modulus leads to less creep deformation at the time of repeated bending, which is advantageous also for exhibition of high bending fatigue resistance. Specifically, a highly heat-resistant fusion inhibitor such as a phosphoric acid ester compound represented by the following chemical formula is preferably used.

[Chemical Formula 2]

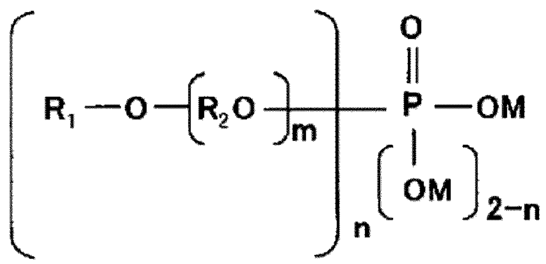

In the formula, it is preferable that $R_1$ be a hydrocarbon having a benzene skeleton, $R_2$ be a hydrocarbon having 2 or more carbon atoms, M be a hydrogen atom, an alkali metal, an alkaline earth metal, or ammonium, m be 0 or more and 30 or less on average, and n be 1 or more and 2 or less on average.

It is preferable that a larger amount of the fusion inhibitor be attached to the fibers in order to reduce fusion, and the amount of the fusion inhibitor is preferably 0.5 wt% or more, and more preferably 1.0 wt% or more based on 100 wt% in total of the fibers. Meanwhile, if the amount of the fusion inhibitor is too large, the fibers become sticky and the handling property is deteriorated, and process passability in the subsequent process is also deteriorated. Therefore, the amount of the fusion inhibitor is preferably 10.0 wt% or less, more preferably 8.0 wt% or less, and particularly preferably 6.0 wt% or less. The amount of the oil (fusion inhibitor) attached to the fibers refers to a value determined by the method described in the section of EXAMPLES.

The method for attaching the oil may be guide oil supply, but the oil is preferably attached by a kiss roll (oiling roll) made of a metal or ceramic in order to uniformly attach the oil to the fibers.

The solid phase polymerization can be performed in an atmosphere of an inert gas such as nitrogen, in an atmosphere of an oxygen-containing active gas such as air, or under reduced pressure, but is preferably performed in a nitrogen atmosphere in order to simplify the facility and prevent oxidation of the fibers or deposits. In this process, the atmosphere for solid phase polymerization is preferably a low-humidity gas having a dew point of -40°C or less.

The maximum attained temperature of the solid phase polymerization, based on the melting point ($T_{m1}$) of the liquid crystalline polyester filament to be subjected to solid phase polymerization, is preferably (the melting point ($T_{m1}$) of the liquid crystalline polyester filament - 80°C) or more. When the maximum attained temperature of the solid phase polymerization is such a high temperature near the melting point, the solid phase polymerization rapidly proceeds, and the strength of the fibers can be improved. The maximum attained temperature is preferably less than $T_{m1}$ in order to prevent fusion. In addition, since the melting point of the liquid crystalline polyester filament increases as the solid phase polymerization progresses, the solid phase polymerization temperature can be increased to about (the melting point ($T_{m1}$) of the liquid crystalline polyester filament to be subjected to the solid phase polymerization + 100°C) according to the progress of the solid phase polymerization.

The solid phase polymerized package is preferably rewound again to increase the winding density in order to increase the transportation efficiency. In this case, when unwinding the filaments from the solid phase polymerized package, in order to prevent collapse of the solid phase polymerized package due to unwinding and to reduce fibrillation at the time of separating slight fusion, it is preferable to unwind the yarns in a direction perpendicular to the rotational axis (revolving direction of the fibers), that is, by the so-called lateral unwinding while rotating the solid phase polymerized package. Further, it is preferable that the solid phase polymerized package be rotated not by free rotation but by positive drive from the viewpoint of reducing the tension to separate yarns from the package and further reducing fibrillation.

The present invention provides a liquid crystalline polyester multifilament having a fiber compressive yield stress of 15 to 40 mN/dtex. Herein, the compressive yield stress of fibers refers to a value determined by the method described in the section of EXAMPLES. As a result of intensive studies for improving the bending fatigue resistance of the liquid crystalline polyester multifilament, the present inventors have found that control of the compressive yield stress greatly improves the bending fatigue resistance as compared with the prior art. Although a definite mechanism by which the bending fatigue resistance is improved is not clear, at the time of repeatedly bending the fibers in a bending fatigue test, it is considered to be important for improving the bending fatigue resistance to prevent the destruction of the fiber structure occurring in the fibers. Herein, it is considered that the higher the compressive yield stress of the fibers is, the less likely it is for the fibers to cause plastic deformation due to the compressive stress generated at the bent portion, so that the bending fatigue resistance is improved.

A method for obtaining the liquid crystalline polyester multifilament having a compressive yield stress of 15 to 40 mN/dtex is not limited at all, and for example, there is a method of appropriately controlling the temperature rise time of the solid phase polymerization and the solid phase polymerization time. The present inventors have found that the compressive yield stress of the liquid crystalline polyester fibers is improved by dividing, into two stages, the temperature rise that is continued until the maximum temperature in the solid phase polymerization is attained, and appropriately controlling the time required for each temperature rise stage. Although a definite mechanism by which the compressive yield stress is improved is not clear, it is considered that the compressive yield stress is improved by raising the temperature rather rapidly to promote the crystallization of the fiber surface in the initial stage of solid phase polymerization, and gradually raising the temperature to densify the crystal structure in the second stage of solid phase polymerization. Specifically, the first stage is a temperature rise starting from ordinary temperature to a temperature of (the melting point - 160°C) to (the melting point - 120°C), and the temperature rise time is preferably 0.1 to 1.0 hour. The temperature rise time as described above can reduce the occurrence of fusion due to too rapid a temperature rise as well as the crystallization of portions other than the surface due to too slow a temperature rise. The second stage is a temperature rise starting from the temperature attained in the first stage to a temperature of (the melting point - 50°C) to (the melting point + 10°C), and the temperature rise time is preferably 20 to 80 hours. The temperature rise time as described above can reduce the insufficient crystallization due to too rapid a temperature rise as well as the thermal deterioration of the fiber surface due to too slow a temperature rise. After each temperature rise, it is preferable to provide a temperature holding section at the attained temperature for 2 to 20 hours.

In the present invention, it is preferable that the yarns have higher flexibility, and the yarn flexibility index X is

preferably 8.0 or less. It is considered that the more flexible the yarns are, the less the bending stress is generated at the time of bending, and the destruction of the fiber structure when the fibers are repeatedly bent in a certain direction can be prevented. As a method of improving the yarn flexibility, for example, there is a method of bending filaments in a plurality of directions at the time the filaments are unwound from a package having completed the solid phase polymerization of the fiber surface. The direction referred to herein refers to a direction indicated in a range of 0 to 360° in a plane perpendicular to the longitudinal direction of the unwound multifilament, and angles formed by a direction in which the multifilament is bent first and directions in which the multifilament is bent thereafter are defined as azimuths (thus, the azimuth in the direction in which the multifilament is bent first is 0°).

In order to improve the flexibility of the multifilament, the number of directions of bending is preferably 4 or more, and more preferably 8 or more. The upper limit of the number of directions of bending is not particularly limited, but is preferably 36 or less in view of deterioration of the workability at the time of yarn threading. In the present invention, a preferable range of the number of directions of bending is 4 to 18 from the viewpoint of workability at the time of yarn threading and simplification of the facility.

In order to make the filaments in the multifilament uniformly flexible, the azimuths when the multifilament is bent in a plurality of directions are preferably angles obtained by equally dividing 360° by the number of times of bending. For example, the azimuths when the multifilament is bent in 8 directions are angles obtained by equally dividing 0 to 360° into 8 in a plane perpendicular to the longitudinal direction of the unwound multifilament, and are 0°, 45°, 90°, 135°, 180°, 225°, 270°, and 315°. The multifilament may be bent in the above-mentioned angles in any order except for bending with an azimuth of 0° (first bending).

The distance between guides (distance from one bend to the next bend) is preferably 50 cm or more in order to reduce the yarn sway after bending and to reduce the yarn detachment from the guide and the catching of the yarn to the guide, and is preferably 100 cm or less in order to make the facility compact.

As a method of bending the multifilament, it is preferable to bend the multifilament with a yarn guide such as a bar guide, a loop guide, an eyelet guide, a slit guide, a hook guide, a snail guide, a roller guide, or a bearing roller guide. In particular, it is more preferable to use a roller guide or a bearing roller guide in order to reduce the abrasion of the multifilament.

The bending angle after the multifilament passes through the guide is preferably 30° or more, and more preferably 60° or more in order to effectively impart bending and improve the flexibility of the yarn. The upper limit of the bending angle is not particularly limited, but is preferably 90° or less from the viewpoint of workability at the time of yarn threading. The bending angle referred to herein refers to an angle formed by an extension line that extends in the longitudinal direction of the traveling yarn before passing through the guide, and the longitudinal direction of the traveling yarn after being bent through the guide.

After the multifilament is bent, a liquid crystalline polyester multifilament package is formed again. In the present invention, a package in the form of a pirn, a drum, a corn, or the like can be formed, but a drum-shaped package capable of having a large winding amount is preferable from the viewpoint of productivity.

As for the liquid crystalline polyester multifilament of the present invention, it is preferable to impart bundling properties to the multifilament in order to improve the process passability when the multifilament is used in a high-order processed product, and in a preferable aspect, various finishing oils are applied according to the purpose.

The strength of the liquid crystalline polyester multifilament of the present invention after solid phase polymerization is preferably 15.0 cN/dtex or more, and more preferably 22.5 cN/dtex or more. When the strength is 15.0 cN/dtex or more, the liquid crystalline polyester multifilament is suitable for industrial material applications in which high strength and weight reduction are required. The upper limit of the strength is not particularly limited, but the upper limit that can be reached in the present invention is about 30.0 cN/dtex. The strength referred to herein refers to a value determined by the method described in the section of

EXAMPLES.

The elongation of the liquid crystalline polyester multifilament of the present invention after solid phase polymerization is preferably 5.0% or less, more preferably 4.5% or less, and still more preferably 4.0% or less. Since the liquid crystalline polyester multifilament has an elongation of 5.0% or less, the liquid crystalline polyester multifilament is difficult to stretch upon being subjected to external stress, and a product including the liquid crystalline polyester multifilament can be suitably used because the product undergoes little dimensional change. The lower limit of the elongation is not particularly limited, but the lower limit that can be reached in the present invention is about 1.0%. The elongation referred to herein refers to a value determined by the method described in the section of EXAMPLES.

The thus obtained liquid crystalline polyester multifilament of the present invention has a compressive yield stress of 15 to 40 mN/dtex, and the liquid crystalline polyester multifilament having such characteristics can exhibit much higher bending fatigue resistance than that in the prior art when used in a high-order processed product. The liquid crystalline polyester multifilament as described above, which has excellent compressive yield stress and has high

strength, high elasticity, heat resistance, dimensional stability, chemical resistance, and low moisture absorption characteristics, can be suitably used in general industrial material applications. Examples of the general industrial material applications include ropes, slings, cables, fishing nets, nets, meshes, woven fabrics, fabrics, sheet-shaped objects, belts, tension members, civil engineering and building materials, sports materials, protective materials, rubber reinforcing materials, various reinforcing cords, resin-reinforcing fiber materials, electric materials, and acoustic materials. In particular among them, in applications such as ropes, slings, cables, and tension members that are high-order processed products and repeatedly bent, the liquid crystalline polyester multifilament of the present invention having excellent compressive yield stress can be suitably used.

EXAMPLES

Hereinafter, the present invention will be more specifically described with reference to examples, but the present invention is not limited to these examples at all. The definition of the characteristics used in the specification and examples as well as the measurement and calculation methods of the physical properties are shown below.

(1) Melting point

In differential calorimetry using a differential scanning calorimeter (DSC 2920 manufactured by TA Instruments Japan Inc.), an endothermic peak temperature ($T_{m1}$) of a liquid crystalline polyester observed by the measurement under temperature rise conditions of 20°C/min from 50°C was observed, and then the liquid crystalline polyester was held at a temperature of approximately ($T_{m1}$ + 20°C) for 5 minutes, then cooled to 50°C at a temperature fall rate of 20°C/min, and then heated again under temperature rise conditions of 20°C/min. An endothermic peak temperature ($T_{m2}$) observed in the above-mentioned process was taken as the melting point. The same operation was performed twice, and the average of the two measurements was taken as the melting point $T_{m2}$ (°C) of the liquid crystalline polyester.

(2) Polystyrene-equivalent weight average molecular weight (Mw) of liquid crystalline polyester

A liquid crystalline polyester is dissolved in a mixed solvent of pentafluorophenol/chloroform = 35/65 (weight ratio) as a solvent while being stirred at 120°C for 20 minutes. In this process, a sample for GPC measurement is prepared so that the sample may have a liquid crystalline polyester concentration of 0.04 wt%. The sample was subjected to measurement using a GPC measurement apparatus manufactured by Waters Corporation, and the Mw was determined in terms of polystyrene. The same operation was performed twice, and the average of the two measurements was taken as the weight average molecular weight (Mw).

Columns: Shodex K-G (1)

Shodex K-806M (2)
Shodex K-802 (1)

Detector: differential refractive index detector RI (model 2414)
Temperature: 23 ± 2°C
Flow rate: 0.8 mL/min
Injection volume: 0.200 mL

(3) Moisture content

The moisture content was measured by a coulometric titration method using a Karl Fischer moisture analyzer (AQ-2100) manufactured by Hiranuma Sangyo Co., Ltd. The average of three measurements was used.

(4) Oil concentration

The weight of a solution containing an oil dispersed therein is defined as W0, and the weight of the oil is defined as W1. A product obtained by multiplying, by 100, a quotient of W1 divided by W0 was defined as an oil concentration (wt%).

(5) Amount of attached oil

Fibers (100 m) were wound into a skein with a measuring machine and weighed, and then the skein was immersed in 100 ml of water and washed for 1 hour using an ultrasonic cleaner. The ultrasonically cleaned skein was

dried at a temperature of 60°C for 1 hour and weighed. A product obtained by multiplying, by 100, a quotient of the difference between the weight before cleaning and the weight after cleaning divided by the weight before cleaning was defined as the amount of attached oil (wt%).

(6) Total fineness

The fineness based on corrected weight was measured under a predetermined load of 0.045 cN/dtex according to JIS L 1013 (2010) 8.3.1 method A, and taken as the total fineness (dtex).

(7) Number of single fibers

The number of single fibers was calculated by the method according to JIS L 1013 (2010) 8.4.

(8) Single fiber fineness

A value obtained by dividing the total fineness by the number of single fibers was defined as the single fiber fineness (dtex).

(9) Strength, elongation, and initial elastic modulus

The measurement was performed under constant speed elongation conditions defined in JIS L 1013 (2010) 8.5.1, Standard Time Test. A sample was subjected to the test using "TENSILON" RTM-100 manufactured by ORIENTEC CORPORATION at a grip interval (measurement sample length) of 250 mm and a tensile speed of 50 mm/min. The strength and elongation were defined as stress at break and elongation at break, respectively. As for the initial elastic modulus, in a graph of stress and elongation obtained in a tensile test, an approximate straight line was drawn between measurement points in a range of elongation of 0.45% to 0.55% by a least squares method, and the slope of the straight line was defined as the initial elastic modulus.

(10) Bending resistance value (A) of multifilament

The bending resistance value was measured with reference to constant speed deflection conditions defined in JIS K 7171 (2016). Specifically, first, in order to unbend and untwist a filament wound into a package, the filament was cut into a length of 1000 mm, a metal hook was tied to one end of the filament and a weight having a breaking load of 300 g was tied to the other end of the filament, and the multifilament was suspended in the air for 24 hours in an environment adjusted to a temperature of 25°C and a relative humidity of 40% to make the multifilament vertical, thereby obtaining a measurement sample. The obtained measurement sample was further cut into a length of 40 mm to produce a sample piece. Using "TENSILON" UTM-4-100 manufactured by Toyo Baldwin Co., Ltd., the obtained test piece was symmetrically placed on support tables placed at an interval of 5 mm, and a force was applied to the center between supporting points of the test piece with an indenter. The indenter was lowered at a constant speed of 20 mm/min in a state where the support tables were fixed, and the maximum load during the application of the force to the test piece was measured and taken as the bending resistance value (A) (cN). The diameters of the support tables and the indenter were 1.0 mm. The average of five measurements was used.

(11) Yarn flexibility index (X) of multifilament

The yarn flexibility index (X) of the multifilament was calculated by the following formula using the bending resistance value (A) (cN) of the multifilament and the total fineness T (dtex) of the multifilament.

$$\text{Yarn flexibility index (X)} = (A/T) \times 10^3$$

(12) Compressive yield stress

One single fiber is left to stand on a stage made of glass, a compression load is gradually applied to the single fiber in the diametrical direction thereof using an indenter, and a load-displacement curve during the process is acquired. In the obtained load-displacement diagram, the data obtained in each of the initial region and the post-yield region were approximated to straight lines, and the load at the intersection of both the straight lines was defined as the yield load. A value obtained by dividing the obtained yield load by the fineness of the single fiber was defined as the compressive

yield stress.

Measurement apparatus: Micro Compression Tester MCTW-500 manufactured by Shimadzu Corporation
Indenter used: flat indenter made of diamond ($\varphi$ = 500 $\mu$m)
Load speed: 41.482 mN/s (constant load speed method)
Measurement temperature: room temperature
Measurement atmosphere: in the atmosphere

(13) Bending fatigue resistance

Using a twisting machine, two multifilaments were single-twisted with a number of twists of 100 T/m while being doubled to produce a doubled and twisted yarn. Then, as shown in Fig. 1, a doubled and twisted yarn 1 as described above was hooked in an S-shape on a pair of freely rotating iron (material: SS400) mirror-finished rolls 2 having an actual distance between roll centers of 14 mm and each having an outer diameter of 10 mm so that the yarn between the rolls might be vertical. Then, a load 3 of 0.5 g/dtex was applied to the doubled and twisted yarn 1, and the metal rolls 2 were reciprocated 8000 times in the vertical direction (reciprocation distance: 100 mm) so that the distance between roll centers might be constant to cause bending fatigue. The strength of the doubled and twisted yarn before bending fatigue and the strength of the doubled and twisted yarn after bending fatigue were measured, and the strength retention rate was calculated by the following formula.

Strength retention rate after bending fatigue (%) = strength of doubled and twisted yarn after bending fatigue/strength of doubled and twisted yarn before bending fatigue × 100

The higher the strength retention rate after bending fatigue was, the more excellent the bending fatigue resistance was. The bending fatigue resistance was classified as follows according to the strength retention rate after bending fatigue.

Bending fatigue resistance:

5: 90% or more

4: 80% or more and less than 90%

3: 70% or more and less than 80%

2: 60% or more and less than 70%

1: less than 60%

<Reference Example 1>

In a 5-L reaction vessel equipped with a stirring blade and a distillation tube, 870 g (6.30 mol) of p-hydroxybenzoic acid, 327 g (1.890 mol) of 4,4'-dihydroxybiphenyl, 89 g (0.810 mol) of hydroquinone, 292 g (1.755 mol) of terephthalic acid, 157 g (0.945 mol) of isophthalic acid, and 1460 g of acetic anhydride (1.10 equivalents of total phenolic hydroxyl groups) were charged, the temperature of the contents was raised from 25°C to a temperature of 145°C over 30 minutes with stirring in a nitrogen gas atmosphere, and then the contents were reacted at the temperature of 145°C for 2 hours. Then, the temperature was raised to 335°C over 4 hours.

The polymerization temperature was held at 335°C, the pressure was reduced to 133 Pa over 1.5 hours, the reaction was continued for another 40 minutes, and polycondensation was completed when the torque reached 28 kgcm. Then, the inside of the reaction vessel was pressurized to 0.1 MPa, the polymer was discharged into a strand through

a spinneret having one circular discharge port having a diameter of 10 mm, and the strand was pelletized with a cutter. The liquid crystalline polyester included, based on the liquid crystalline polyester in total, 54 mol% of a p-hydroxybenzoic acid unit, 16 mol% of a 4,4'-dihydroxybiphenyl unit, 8 mol% of an isophthalic acid unit, 15 mol% of a terephthalic acid unit, and 7 mol% of a hydroquinone unit, had a melting point ($T_{m2}$) of 315°C, and had a melt viscosity of 30 Pa·sec as measured using a high flow tester at a temperature of 330°C and a shear rate of 1,000/sec. The liquid crystalline polyester had a Mw of 145,000.

<Reference Example 2>

In a 5-L reaction vessel equipped with a stirring blade and a distillation tube, 907 g (6.57 mol) of p-hydroxybenzoic acid, 457 g (2.42 mol) of 6-hydroxy-2-naphthoic acid, and 946 g of acetic anhydride (1.03 equivalents of total phenolic hydroxyl groups) were charged, the temperature of the contents was raised from 25°C to a temperature of 145°C over 30 minutes with stirring in a nitrogen gas atmosphere, and then the contents were reacted at the temperature of 145°C for 2 hours. Then, the temperature was raised to 325°C over 4 hours.

The polymerization temperature was held at 325°C, the pressure was reduced to 133 Pa over 1.5 hours, the reaction was continued for another 20 minutes, and polycondensation was completed when the torque reached 15 kgcm. Then, the inside of the reaction vessel was pressurized to 0.1 MPa, the polymer was discharged into a strand through a spinneret having one circular discharge port having a diameter of 10 mm, and the strand was pelletized with a cutter. The liquid crystalline polyester included, based on the liquid crystalline polyester in total, 73 mol% of a p-hydroxybenzoic acid unit and 27 mol% of a 6-hydroxy-2-naphthoic acid unit, had a melting point ($T_{m2}$) of 285°C, and had a melt viscosity of 32 Pa·sec as measured using a high flow tester at a temperature of 293°C and a shear rate of 1,000/sec. The liquid crystalline polyester had a Mw of 125,000.

[Example 1]

Using the liquid crystalline polyester of Reference Example 1, vacuum drying was performed at 120°C for 12 hours to remove moisture and oligomers. The liquid crystalline polyester then had a moisture content of 50 ppm. The dried liquid crystalline polyester was melt-extruded with a single-screw extruder (heater temperature: 290 to 340°C), and the polymer was supplied to a spinning pack while being weighed with a gear pump. The spinning temperature from the extruder outlet to the spinning pack was 335°C. In the spinning pack, the polymer was filtered using a metal nonwoven fabric filter having a filtration accuracy of 15 μm, and the polymer was discharged at a discharge rate of 100 g/min (0.33 g/min per single hole) from a spinneret having 300 holes each having a hole diameter of 0.13 mm and a land length of 0.26 mm.

The polymer was cooled and solidified at room temperature immediately after discharge, and a liquid crystalline polyester multifilament of 300 filaments was taken up using a Nelson roller at 600 m/min while an aqueous solution containing 2 mass% of a phosphoric acid ester compound A (fusion inhibitor) liquid at ordinary temperature was attached to the multifilament using an oiling roller. The spinning draft then was 29.3. The amount of attached oil was 1.5 wt%. The multifilament taken up by the Nelson roller was passed on a dancer arm as it was and wound into a cheese shape using a blade traverse winder. The liquid crystalline polyester had good stringiness in melt spinning, and a liquid crystalline polyester multifilament having a total fineness of 1680 dtex and a single fiber fineness of 5.6 dtex was stably spun without yarn breakage to give spinning original yarns as a 4.0 kg package. Herein, the phosphoric acid ester compound A is the phosphoric acid ester compound represented by Chemical Formula 2, and $R_1$ is an aryl group, $R_2$ is a linear saturated hydrocarbon having 2 to 4 carbon atoms, M is potassium, m is 8 on average, and n is 1 on average.

The fibers were unwound from the spinning package in the longitudinal direction (a direction perpendicular to the revolving direction of the fibers), and rewound at 400 m/min with a winding machine (Precision Winder model SSP-WV8P manufactured by KAMITSU SEISAKUSHO LTD.) having a constant speed. A stainless steel bobbin was used as a core material for rewinding, the tension at the time of rewinding was 0.005 cN/dtex, the winding density was 0.50 g/cm$^3$, and the winding amount was 4.0 kg. Further, the package had a tapered end shape having a taper angle of 65°.

The resulting rewound sample was subjected to solid phase polymerization using a closed oven. As for the temperature of the solid phase polymerization, the solid phase polymerization was performed under the conditions of raising the temperature from room temperature to 165°C (melting point - 150°C) over 0.2 hours, holding the temperature at 165°C for 3 hours, then raising the temperature from 165°C to 275°C (melting point - 40) over 40 hours, and further holding the temperature at 275°C for 3 hours. As for the atmosphere in the solid phase polymerization, dehumidified nitrogen was supplied at a flow rate of 100 L/min, and the oven was evacuated from the exhaust port so that the interior of the oven might not be pressurized.

The solid phase polymerized package thus obtained was attached to a feeding device rotatable by an inverter motor, and the fibers were unwound while being fed at 200 m/min in a lateral direction (revolving direction of the fibers). A bearing roller guide (A312030) manufactured by YUASA YARN GUIDE ENGINEERING CO., LTD. was installed at a

position where the resulting package might have a yarn length of 50 cm, and the fibers were bent at a bending angle of 60° in 18 directions (18 equal divisions) and then wound into a product package by a winding machine. The fibers had physical properties as shown in Table 1. The liquid crystalline polyester multifilament of the present invention obtained in Example 1 had a yarn flexibility index (X) of 3.8, a compressive yield stress of 38 mN/dtex, an initial elastic modulus of 687 cN/dtex, and a bending fatigue resistance of the product (suitability for high-order processed products) of "5".

[Examples 2 to 7]

A liquid crystalline polyester multifilament was obtained in the same manner as in Example 1 except that the temperature rise time, the holding time, and the temperature during solid phase polymerization were changed as shown in Table 1.

[Examples 8 to 11]

A liquid crystalline polyester multifilament was obtained in the same manner as in Example 1 except that the total fineness and the number of filaments were changed as shown in Table 1 by changing the number of holes and the discharge rate of the spinneret.

[Example 12]

A liquid crystalline polyester multifilament was obtained in the same manner as in Example 1 except that the fusion inhibitor was changed to a solution containing 1 mass% of polydimethylsiloxane ("SH 200-350cSt" manufactured by Dow Corning Toray Co., Ltd.) dispersed in water.

[Example 13]

A liquid crystalline polyester multifilament was obtained in the same manner as in Example 1 except that the fibers were not bent at the time of unwinding of the solid phase polymerized package.

[Examples 14 and 15]

A liquid crystalline polyester multifilament was obtained in the same manner as in Example 1 except that the liquid crystalline polyester of Reference Example 2 was used, and that the temperature rise time, the holding time, and the temperature during solid phase polymerization were changed as shown in Table 1.

[Comparative Examples 1 to 4]

A liquid crystalline polyester multifilament was obtained in the same manner as in Example 1 except that the temperature rise time, the holding time, and the temperature during solid phase polymerization were changed as shown in Table 2.

[Comparative Example 5]

A liquid crystalline polyester multifilament was obtained in the same manner as in Example 1 except that as inorganic fine particles, synthetic inorganic fine particles ("Somasif" (registered trademark) ME-100 manufactured by Co-op Chemical Co., Ltd., Mohs hardness = 2.8) having an average particle size of 5 to 7 μm and mainly containing silicic acid and magnesium were dispersed in a spinning oil mainly containing polyethylene glycol laurate at a concentration of 6 wt%, the resulting dispersion was attached to spinning original yarns, and the above-mentioned "Somasif ME-100" was swollen and cleaved to have an average particle size of 0.02 to 7 μm at the time of attachment, that the spinning original yarns were then ultrasonically cleaned in distilled water for 3 hours to remove the fine particles and adjust the amount of attached fine particles to 0.6 wt%, that the sample was heat-treated at a temperature of (the melting point - 20°C) for 2 hours and at a temperature of (the melting point - 0°C) for 12 hours during solid phase polymerization, and that the fibers were not bent at the time of unwinding of the solid phase polymerized package.

[Comparative Example 6]

A liquid crystalline polyester multifilament was obtained in the same manner as in Example 1 except that the liquid crystalline polyester of Reference Example 2 was used, and that the temperature rise time, the holding time, and

the temperature during solid phase polymerization were changed as shown in Table 2.

[Table 1-1]

| | | | Example 1 | Example 2 | Example 3 | Example 4 | Example 5 | Example 6 | Example 7 | Example 8 |
|---|---|---|---|---|---|---|---|---|---|---|
| Liquid crystalline polyester | | - | Reference Example 1 | Reference Example 1 | Reference Example 1 | Reference Example 1 | Reference Example 1 | Reference Example 1 | Reference Example 1 | Reference Example 1 |
| Fusion inhibitor | | - | *1 | *1 | *1 | *1 | *1 | *1 | *1 | *1 |
| Solid phase polymerization conditions | Temperature rise time in first stage | h | 0.2 | 0.2 | 0.2 | 0.5 | 0.2 | 0.2 | 0.2 | 0.2 |
| | Holding temperature at first stage | °C | 165 (Melting point - 150) | 165 (Melting point - 150) | 165 (Melting point - 150) | 165 (Melting point - 150) | 180 (Melting point - 135) | 165 (Melting point - 150) | 165 (Melting point - 150) | 165 (Melting point - 150) |
| | Temperature rise time in second stage | h | 40 | 30 | 60 | 40 | 40 | 40 | 40 | 40 |
| | Holding temperature at second stage | °C | 275 (Melting point - 40) | 275 (Melting point - 40) | 275 (Melting point - 40) | 275 (Melting point - 40) | 275 (Melting point - 40) | 300 (Melting point - 15) | 275 (Melting point - 40) | 275 (Melting point - 40) |
| | Holding time at each stage | h | 3 | 3 | 3 | 3 | 3 | 3 | 6 | 3 |
| Bending after solid phase polymerization | | - | Yes | Yes | Yes | Yes | Yes | Yes | Yes | Yes |
| Physical properties of heat-treated yarn | Total fineness | dtex | 1680 | 1680 | 1680 | 1680 | 1680 | 1680 | 1680 | 1680 |
| | Number of filaments | number | 300 | 300 | 300 | 300 | 300 | 300 | 300 | 600 |
| | Single yarn fineness | dtex | 5.6 | 5.6 | 5.6 | 5.6 | 5.6 | 5.6 | 5.6 | 2.8 |
| | Strength | cN/dtex | 23.8 | 24.6 | 24.1 | 22.1 | 24.2 | 25.2 | 23.9 | 24.7 |
| | Elongation | % | 2.6 | 2.7 | 2.7 | 2.5 | 2.7 | 2.9 | 2.6 | 2.7 |
| | Initial elastic modulus | cN/dtex | 687 | 722 | 690 | 656 | 702 | 721 | 672 | 723 |
| | Yarn flexibility index X | - | 3.8 | 3.6 | 3.7 | 3.9 | 3.6 | 3.8 | 3.6 | 3.3 |
| | Compressive yield stress | mN/dtex | 38 | 15 | 29 | 31 | 24 | 33 | 30 | 40 |
| | Bending fatigue resistance of product | - | 5 | 3 | 4 | 4 | 3 | 4 | 3 | 5 |

*1: Phosphoric acid ester compound A

*2: Polydimethylsiloxane

[Table 1-2]

| | | | Example 9 | Example 10 | Example 11 | Example 12 | Example 13 | Example 14 | Example 15 |
|---|---|---|---|---|---|---|---|---|---|
| Liquid crystalline polyester | | - | Reference Example 1 | Reference Example 1 | Reference Example 1 | Reference Example 1 | Reference Example 1 | Reference Example 2 | Reference Example 2 |
| Fusion inhibitor | | - | *1 | *1 | *1 | *2 | *1 | *1 | *1 |
| Solid phase polymerization conditions | Temperature rise time in first stage | h | 0.2 | 0.2 | 0.2 | 0.2 | 0.2 | 0.2 | 0.2 |
| | Holding temperature at first stage | °C | 165 (Melting point - 150) | 165 (Melting point - 150) | 165 (Melting point - 150) | 165 (Melting point - 150) | 165 (Melting point - 150) | 135 (Melting point - 150) | 135 (Melting point - 150) |
| | Temperature rise time in second stage | h | 40 | 40 | 40 | 30 | 30 | 40 | 40 |
| | Holding temperature at second stage | °C | 275 (Melting point - 40) | 275 (Melting point - 40) | 275 (Melting point - 40) | 275 (Melting point - 40) | 275 (Melting point - 40) | 245 (Melting point - 40) | 270 (Melting point - 15) |
| | Holding time at each stage | h | 3 | 3 | 3 | 3 | 3 | 3 | 3 |
| Bending after solid phase polymerization | | - | Yes | Yes | Yes | Yes | No | Yes | Yes |
| Physical properties of heat-treated yarn | Total fineness | dtex | 1680 | 1100 | 400 | 1680 | 1680 | 1680 | 1680 |
| | Number of filaments | number | 150 | 192 | 72 | 300 | 300 | 300 | 300 |
| | Single yarn fineness | dtex | 11.2 | 5.7 | 5.6 | 5.6 | 5.6 | 5.6 | 5.6 |
| | Strength | cN/dtex | 22.8 | 24.9 | 25.3 | 23.2 | 24.1 | 24.2 | 25.1 |
| | Elongation | % | 2.5 | 2.7 | 2.7 | 2.6 | 2.7 | 3.8 | 3.9 |
| | Initial elastic modulus | cN/dtex | 681 | 734 | 742 | 384 | 686 | 462 | 499 |
| | Yarn flexibility index X | - | 3.9 | 3.8 | 3.9 | 3.8 | 9.2 | 3.8 | 3.7 |
| | Compressive yield stress | mN/dtex | 37 | 38 | 37 | 28 | 35 | 36 | 33 |
| | Bending fatigue resistance of product | - | 5 | 5 | 5 | 2 | 2 | 4 | 3 |

*1: Phosphoric acid ester compound A

*2: Polydimethylsiloxane

[Table 2]

| | | | Comparative Example 1 | Comparative Example 2 | Comparative Example 3 | Comparative Example 4 | Comparative Example 5 | Comparative Example 6 |
|---|---|---|---|---|---|---|---|---|
| Liquid crystalline polyester | | - | Reference Example 1 | Reference Example 1 | Reference Example 1 | Reference Example 1 | Reference Example 1 | Reference Example 2 |
| Fusion inhibitor | | | *1 | *1 | *1 | *1 | *3 | *1 |
| Solid phase polymerization conditions | Temperature rise time in first stage | h | 10 | 0.5 | 4 | 30 | As described in the description | 10 |
| | Holding temperature at first stage | °C | 300 (Melting point - 15) | 240 (Melting point - 75) | 165 (Melting point - 150) | 165 (Melting point - 150) | | 270 (Melting point - 15) |
| | Temperature rise time in second stage | h | No | 12.5 | 10 | 30 | | No |
| | Holding temperature at second stage | °C | No | 290 (Melting point - 25) | 275 (Melting point - 40) | 275 (Melting point - 40) | | No |
| | Holding time at each stage | h | 10 | 3 | 3 | 3 | | 10 |
| Bending after solid phase polymerization | | - | No | Yes | Yes | Yes | No | No |
| Physical properties of heat-treated yarn | Total fineness | dtex | 1680 | 1680 | 1680 | 1680 | 1680 | 1680 |
| | Number of filaments | number | 300 | 300 | 300 | 300 | 300 | 300 |
| | Single yarn fineness | dtex | 5.6 | 5.6 | 5.6 | 5.6 | 5.6 | 5.6 |
| | Strength | cN/dtex | 19.4 | 22.1 | 24.7 | 21.8 | 23.9 | 18.7 |
| | Elongation | % | 2.3 | 2.5 | 2.8 | 2.4 | 2.6 | 3.0 |
| | Initial elastic modulus | cN/dtex | 395 | 659 | 703 | 621 | 518 | 312 |
| | Yarn flexibility index X | - | 10.3 | 3.9 | 4.2 | 4.4 | 8.7 | 10.3 |
| | Compressive yield stress | mN/dtex | 4 | 8 | 7 | 5 | 6 | 5 |
| | Bending fatigue resistance of product | - | 1 | 1 | 1 | 1 | 1 | 1 |

*1: Phosphoric acid ester compound A

*3: Inorganic fine particle-containing polyethylene glycol laurate

As is apparent from Examples 1 to 15 in Table 1, when the solid phase polymerization conditions were adjusted, a liquid crystalline polyester multifilament having a compressive yield stress of 15 to 40 mN/dtex was obtained, and high bending fatigue resistance was exhibited even after high-order processing. As described above, when the compressive yield stress was set to 15 to 40 mN/dtex, the liquid crystalline polyester multifilament exhibited high bending fatigue resistance when used in a high-order processed product, was suitable for high-order processed products, and was suitably used in general industrial material applications such as ropes and slings.

Meanwhile, as is apparent from Comparative Examples 1 to 7 in Table 2, when the solid phase polymerization conditions were not appropriate, the compressive yield stress was less than 15 mN/dtex, and sufficient bending fatigue resistance of the product was not obtained. As described above, when the compressive yield stress is less than 15 mN/dtex, the intended effect of the present invention is not exhibited.

INDUSTRIAL APPLICABILITY

Since the liquid crystalline polyester multifilament of the present invention has a compressive yield stress of 15 to 40 mN/dtex, in the case where the liquid crystalline polyester multifilament is used in a high-order processed product, the liquid crystalline polyester multifilament can maintain high strength even when repeatedly bent. Such a liquid crystalline polyester multifilament can exhibit much higher bending fatigue resistance than that in the prior art, and thus can be suitably used in general industrial material applications such as ropes, slings, and tension members.

DESCRIPTION OF REFERENCE SIGNS

1: Doubled and twisted yarn
2: Metal roll
3: Load
4: Distance between roll centers

**Claims**

1. A liquid crystalline polyester multifilament having a fiber compressive yield stress of 15 to 40 mN/dtex.

2. The liquid crystalline polyester multifilament according to claim 1, having a yarn flexibility index of 8.0 or less.

3. The liquid crystalline polyester multifilament according to claim 1 or 2, having an initial elastic modulus of 400 cN/dtex or more.

4. The liquid crystalline polyester multifilament according to claims 1 to 3, having a number of filaments of 10 to 600.

5. The liquid crystalline polyester multifilament according to claims 1 to 4, having a total fineness of 100 to 3000 dtex.

6. The liquid crystalline polyester multifilament according to any one of claims 1 to 5, comprising a liquid crystalline polyester including structural units (I), (II), (III), (IV), and (V) shown below:

[Chemical Formula 1]

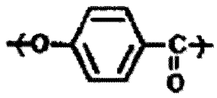 (I)

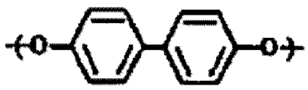 (II)

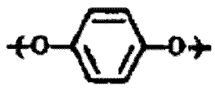 (III)

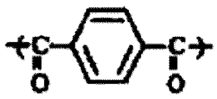 (IV)

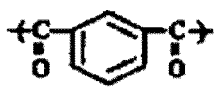 (V)

**7.** The liquid crystalline polyester multifilament according to claims 1 to 6, wherein a percentage of the structural unit (I) is 40 to 85 mol% based on a total amount of the structural units (I), (II), and (III), a percentage of the structural unit (II) is 60 to 90 mol% based on a total amount of the structural units (II) and (III), and a percentage of the structural unit (IV) is 40 to 95 mol% based on a total amount of the structural units (IV) and (V).

**8.** The liquid crystalline polyester multifilament according to any one of claims 1 to 5, comprising a liquid crystalline polyester including a p-hydroxybenzoic acid structural unit and a 6-hydroxy-2-naphthoic acid structural unit.

**9.** The liquid crystalline polyester multifilament according to any one of claims 1 to 5 and 8, comprising, based on the liquid crystalline polyester multifilament in total, 60 to 80 mol% of a p-hydroxybenzoic acid structural unit and 20 to 40 mol% of a 6-hydroxy-2-naphthoic acid structural unit.

**10.** A high-order processed product comprising the liquid crystalline polyester multifilament according to any one of claims 1 to 9.

**11.** A rope, a sling, a tension member, or a cable comprising the liquid crystalline polyester multifilament according to any one of claims 1 to 9.

Figure 1

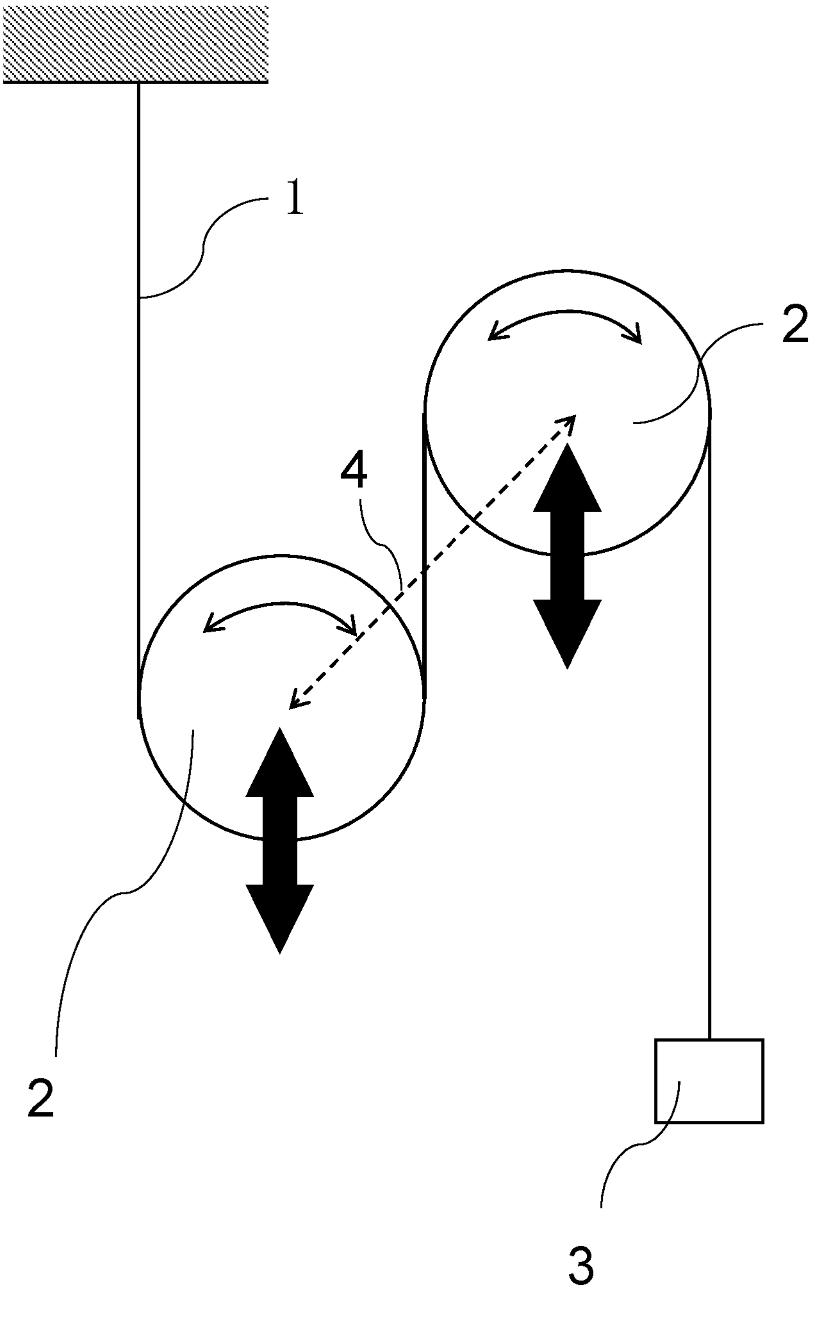

## INTERNATIONAL SEARCH REPORT

International application No.
PCT/JP2020/002868

A. CLASSIFICATION OF SUBJECT MATTER
Int. Cl. D01F6/62(2006.01)i, D07B1/02(2006.01)i, G02B6/44(2006.01)i
FI: D01F6/62 308, D07B1/02, G02B6/44 376

According to International Patent Classification (IPC) or to both national classification and IPC

B. FIELDS SEARCHED
Minimum documentation searched (classification system followed by classification symbols)
Int. Cl. D01F6/62, D07B1/02, G02B6/44

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2011-202290 A (TORAY INDUSTRIES, INC.) 13 October 2011, example 4, claims, paragraphs [0070], [0085] | 1-11 |
| A | JP 2016-176161 A (TORAY INDUSTRIES, INC.) 06 October 2016, claim 8, paragraph [0018] | 1-11 |
| A | JP 2018-40077 A (TORAY INDUSTRIES, INC.) 15 March 2018, paragraph [0100], claim 6 | 1-11 |
| A | JP 2018-3219 A (TORAY INDUSTRIES, INC.) 11 January 2018, paragraph [0070], claim 1 | 1-11 |
| A | JP 2015-78462 A (KB SEIREN LTD.) 23 April 2015, paragraph [0029] | 1-11 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31.03.2020 | 07.04.2020 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.
PCT/JP2020/002868

C (Continuation). DOCUMENTS CONSIDERED TO BE RELEVANT

| Category* | Citation of document, with indication, where appropriate, of the relevant passages | Relevant to claim No. |
|---|---|---|
| A | JP 11-269737 A (KURARAY CO., LTD.) 05 October 1999, paragraph [0043] | 1-11 |

Form PCT/ISA/210 (continuation of second sheet) (January 2015)

**INTERNATIONAL SEARCH REPORT**
Information on patent family members

International application No.
PCT/JP2020/002868

| Patent Documents referred to in the Report | Publication Date | Patent Family | Publication Date |
|---|---|---|---|
| JP 2011-202290 A | 13.10.2011 | (Family: none) | |
| JP 2016-176161 A | 06.10.2016 | (Family: none) | |
| JP 2018-40077 A | 15.03.2018 | (Family: none) | |
| JP 2018-3219 A | 11.01.2018 | (Family: none) | |
| JP 2015-78462 A | 23.04.2015 | (Family: none) | |
| JP 11-269737 A | 05.10.1999 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004107826 A